# EUROPEAN PATENT APPLICATION

(11) **EP 2 141 527 A2**
(43) Date of publication of application: **06.01.2010**
(21) Application number: 09251714.3
(22) Date of filing: 02.07.2009
(51) Int. Cl.: G02B 6/44, H02G 3/00, H02G 15/00

(54) **Optical fibre tap off device securable around an optical cable as fibre management device**

(30) Priority: 04.07.2008 GB 0812269
(71) Applicant: Tyco Electronics Raychem BVBA, 3010 Kessel-Lo (BE)
(72) Inventor: Vastmans, Kristof, 3370 Boutersem (BE); Labraymi, Mohammad, 2140 Antwerp (BE); Kempeneers, Dirk, 3200 Aarschot (BE); Adraenssen, Ward, 2900 Schoten (BE)
(74) Representative: Jay, Anthony William

(57) **Abstract**

A tap off device (1) securable around an optical fibre cable (1230) comprising a bundle of optical fibres (1260a,1260b,1260c). The tap off device comprises a base portion (1a) and a lid portion (1b), a fibre inlet port (5a,5b,5c,5d) provided on the base or lid portion, and a fibre outlet port (7a,7b,7c,7d) provided on the base or lid portion. The fibre inlet port (5b) is arranged to receive a fibre from the cable and route said fibre to the fibre outlet port (7b). The fibre outlet port is radially displaced from the fibre input port and arranged to guide the fibre from the tap off device in a direction which is substantially parallel to the longitudinal axis of the optical cable.

## Description

### Field of the Invention

The present invention relates to a fibre management device. More particularly, the present invention relates to an optical fibre management device, namely a tap off device for use with optical fibre cables comprising bundles of optical fibres.

### Background of the Invention

Optical fibre tap off devices are known.

For example, in a multiple dwelling unit (such as a building or office block) which receives outside service provider cables from a provider, it is necessary to couple these outside service provider cables with riser cables feeding individual dwelling units (such as apartments or offices) within the multiple dwelling unit.

The riser cables are typically housed within a riser shaft within the multiple dwelling unit. That riser shaft typically houses a number of services including the optical network intended to distribute a signal to each individual dwelling unit within the multiple dwelling unit.

It would be understood that there is limited space within said riser shaft.

In order to provide an individual fibre or fibre bundle to an individual dwelling unit it is necessary to extract a fibre or fibre bundle from the riser cable and re-route that cable towards the end user. That process of extraction and re-routing is known at tapping off.

Various devices suitable for tapping off fibres from a riser cable are known.

As the number of outside service provider fibres increase fibres to be housed within the same space within the riser shaft increases.

Whilst various tap off devices exist, they each have their own shortfalls and can take up a significant amount of space within the riser shaft, or make it difficult to tap off a fibre in the desired direction. Incorrect redirection of fibres or fibre bundles can, in extreme circumstances, can lead to fatigue, damage, or even failure of the applied fibre.

Accordingly, it is desired to provide an improved tap off device.

### Summary of the Invention

Accordingly, a first embodiment of the invention provides a tap off device securable around an optical fibre cable, said optical fibre cable comprising a bundle of optical fibres, the tap off device comprising a base portion and a lid portion, a fibre inlet port provided on the base or lid portion and a fibre outlet port provided on the base or lid portion, the fibre inlet port being arranged to receive a fibre from the cable and route said fibre to the fibre outlet port, the fibre outlet port being radially displaced from the fibre input port and arranged to guide the fibre from the tap off device in a direction which is substantially parallel to the longitudinal axis of the optical fibre cable.

Arranging the fibre outlet port such that it guides the fibre from the tap off device in a direction substantially parallel to the longitudinal axis of the optical cable allows the tap off device to be particularly compact in a direction extending transverse to the longitudinal axis of the cable.

Known tap off devices are arranged to guide the fibre from the tap of device in a particular direction transverse to the longitudinal axis of the cable. In particular, known tap off devices are "V" or "Y" shaped, such that an installer must choose an appropriate tap off device, or correctly orientate a tap off device so that the fi bre is guided from a riser cable towards an end user by the tap off device in the correct direction.

Arranging the fibre outlet port such that it guides the fibre from the tap off device in a direction substantially parallel to the longitudinal axis of th e cable has the advantage that the resulting tap off is not directed in a particular direction transverse to the longitudinal axis, and the exiting fibre may be easily "tapped off" in almost any direction transverse to the longitudinal axis of the cable.

The tap off device may comprise a plurality of fibre outlet ports. Such an arrangement allows more than one fibre to be tapped off from the optical fibre cable at any given tap off point. Allowing more than one fibre or fibre bundle to be extracted and tapped off from the optical fibre cable at any given position along the axis of the optical cable allows for increased flexibility in terms of supply of a signal to various locations in an optical system, and recognises that it may not be practical, due to limited space available within the optical system housing, for example a riser shaft provided in a MDU, to provide a separate dedicated tap off device for each fibre, or fibre bundle that needs to be tapped off from the optical cable.

The plurality of outlet ports may be arranged substantially concentrically around the longitudinal axis of the optical cable. Such an arrangement further assists minimisation of the transverse size of the tap off device and may, for example, allow increased number of fibre tap off points at a given position along the longitudinal axis of the optical cable, such increased tap off density may help ease possible congestion within the optical system, particularly in the case where there is limited space available within the optical system housing, for example a riser shaft provided in a MDU.

The outlet port of the tap off device may be connectable to a bend control device arranged to prevent a fibre leaving the outlet port in a direction or manner in which the minimum bend radius of the fibre is exceeded.

Provision of a bend control device ensures that the fibre being tapped off from the optical fibre cable bundle is not damaged in making the transition from the tap off device to a given fibre destination. The bend control device may, for example, take the form of a fibre tube having suitable resilient material properties located around the fibre. The tube may, for example, be constructed from a material which cannot be deformed in a manner that would exceed the minimum bend radius of the fibre enclosed therein. The bend control device may, for example, be a "boot", said boot being substantially tubular and surrounding a section of the fibre leaving the outlet port. As has been described above, the boot may also have material properties that prevent the section of the fibre surrounded by the boot from being deformed in a manner in which the minimum bend radius of the fibre is exceeded. Alternatively the fibre itself could include a coating or sleeving material which prevents or substantially limits deformation such that the minimum bend radius of the fibre may not be easily exceeded.

The bend control device may be integrally formed with the fibre outlet port.

The base and lid portion of the tap off device may be substantially permanently connected but movable with respect to one another. That connection may, for example, take the form of a hinged or pivoted connection. Substantially permanently securing the base and lid portion of the tap off device such that the base and lid portion may be either opened in an open position or a closed position has the advantage that the tap off device is re-enterable and consequently reusable. Furthermore, ensuring that the lid and base portion are substantially permanently connected to one another means that an installer performing a tap off operation is unlikely to lose or misplace one or other of the base or lid portion. Such a situation may occur in the case where the lid and base portion are separable and when an installer is working in a congested optical system environment with limited access, for example the riser shaft of a MDU.

The base and/or lid portion of the tap off device may be constructed from a flexible material. Constructing the tap off device from a flexible ma terial allows for any movement or deformation of the cable to be accommodated by the tap off device without passing resultant strains to fibres housed within the fibre tap off device. Transferral of such strains to the tapped of fibres or remaining fibres housed within the cable can damage the fibres or detrimentally affect an optical signal being transmitted along the fibres.

The tap off device may be secured to the optical cable to retain the tap off device in position with respect to the optical cable. Such securing may take the form of a cable tie passed around the base and lid portion so as to clamp the base and lid portion to an outer shell or outer sleeve of the optical fibre cable.

Alternatively or additionally a region of an inner surface of the base and/or lid portion may include gripping elements arranged to grip the outer surface of the optical cable. Provision of gripping elements arranged to grip the outer surface of the cable can assist in holding the tap off device in position with respect to the optical cable. In some circumstances the gripping elements arranged to grip the outer surface of the optical cable may negate the need for a separate cable tie. The gripping elements may take the form, for example, of a series of suitably dimensioned ridges or teeth, or may, for example, take the form of a region of material having appropriate gripping properties (a sufficiently high coefficient of friction between the material and the cable sheath) to minimise movement of the tap off device along the axis of the cable.

The tap off device may further comprise rotation-limitation elements that cooperate with a sleeve positioned around a region of the bundle of optical fibres and substantially prevent rotational movement of the tap off device around the longitudinal axis of the cable. Prevention of rotational movement of the tap off device around the longitudinal axis of the cable can minimise the torsional stresses that would be caused in the optical fibres by such rotational movement. Such stresses may damage the fibres and may disturb or cause detriment to the optical performance of the fibre.

The tap off device may further comprise slide prevention elements that cooperate with a sleeve positioned around the bundle of optical fibres and substantially prevent movement of the tap off device in at least one direction along the axis of the cable. Uncontrolled movement of the tap off device along the axis of the cable may cause damage to the optical fibre or otherwise compromise optical performance thereof.

A further embodiment of the invention provides a method of tapping off a fibre from an optical cable comprising a bundle of optical fibres comprising the steps of: providing a tap off device comprising a base portion and a lid portion, a fib re inlet port provided on the base or lid portion, and a fibre outlet port provided on the base or lid portion, the fibre outlet port being radially displaced from the fibre input port and arranged to guide the fibre from the tap off device in a direction which is substantially parallel to the longitudinal axis of the optical cable;
securing the tap off device around an optical fibre cable;
arranging the fibre input port to receive a fibre from the cable; and
routing said fibre from the input port to the fibre outlet port.

Further particular and preferred aspects of the present invention are set out in the accompanying independent and dependent claims. Features of the dependent claims may be combined with features of the independent claims as appropriate, and in combinations other than those explicitly set out in the claims.

### Brief Description of the Drawings

Embodiments of the present invention will now be described, with reference to the accompanying drawings, in which:
Figure 1 illustrate a cable distribution arrangement;
Figure 2 illustrates an arrangement of an optical cable;
Figure 3 illustrates an arrangement of a multiple dwelling unit building distributor according to an embodiment;
Figure 4 illustrates a base portion of a tap off device in accordance with an embodiment of the present invention;
Figure 5 illustrates the base portion of Figure 4 located around an optical cable;
Figure 6 illustrates the base portion of Figure 4 in place on an optical cable;
Figure 7 illustrates a partially closed tap off device in accordance with an embodiment of the present invention;
Figure 8 illustrates a tap off device in accordance with the present invention located around the cable; and
Figure 9 shows the tap off device when secured to the cable.

### Description of the Embodiments

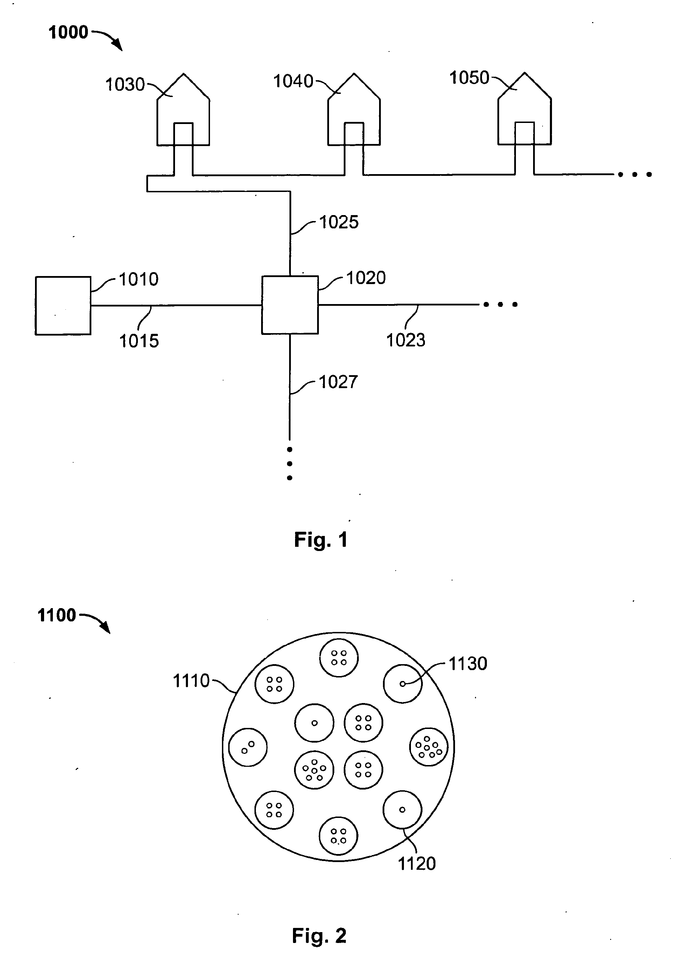

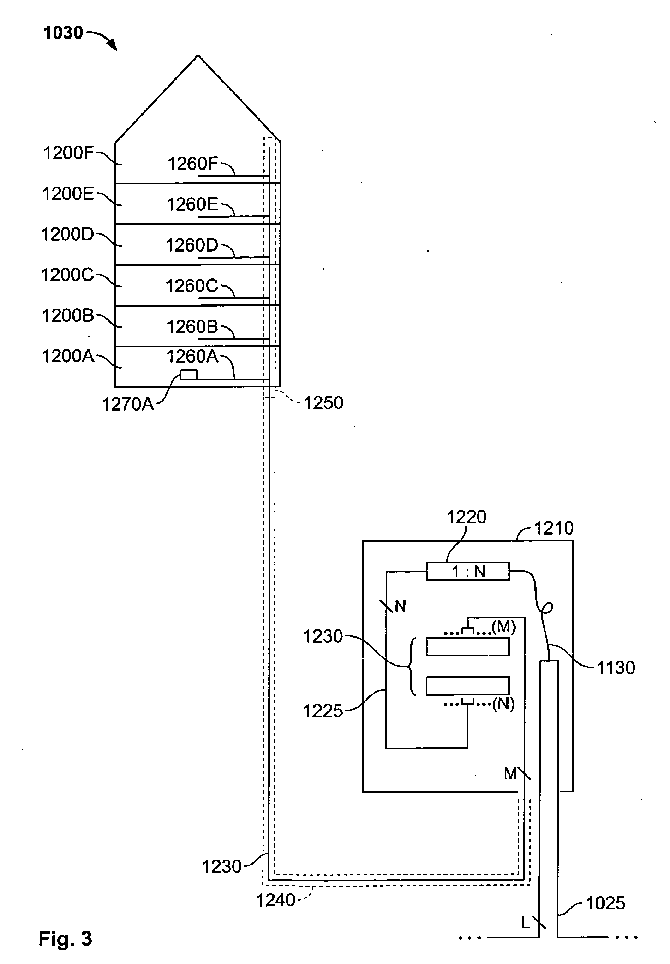

Figure 1 illustrates a cable distribution arrangement 1000. A central office 1010 associated with a service provider is coupled with a distribution point 1020 by an outside service provider cable 1015. Distribution point 1020 may be coupled with further distributions points (not shown) using outside service provider distribution cables 1023 and 1027. The distribution point 1020 couples with one or more multiple dwelling units 1030, 1040, 1050, using an outside service provider distribution cable 1025. The outside service provider distribution cable 1025 loops through each multiple dwelling unit 1030, 1040, 1050 in turn. The outside service provider distribution cable 1025 may also loop through further multiple dwelling units (not shown). In this way, it can be seen that the service provider couples via an optical network with the multiple dwelling units 1030, 1040, 1050. Details of how the outside service provider distribution cable 1025 is then utilised within the multiple dwelling units 1030, 1040, 1050 are described below, with reference to Figure 3.

Figure 2 illustrates a typical arrangement of an optical cable 1100, such as would be utilised for the outside service provider cable 1015, the outside service provider distribution cables 1023, 1025, 1027, or for cables utilised within the multiple dwelling units 1030, 1040, 1050. The cable 1100 comprises an outer jacket 1110 which provides for appropriate environmental protection of the cable 1100. Disposed within the cable jacket 1110 is a plurality of tubes 1120. Within the tubes 1120 are provided one or more individual fibres 1130. Typically 16 or 32 individual fibres 1130 may be provided within a single tube 1120. Also a braided kevlar (registered trade mark) strand (not shown) may be provided within cable 1100 which may be mechanically coupled with a pulling tool to assist in routing the cable.

Figure 3 illustrates an arrangement of a multiple dwelling unit building distributor 1210 for dwelling unit 1030 according to one embodiment. In the example shown in Figure 3, the multiple dwelling unit 1030 comprises a single dwelling unit 1200A-1200F on each floor. However, it will be appreciated that more than one dwelling unit may be provided on each floor of the building. The other multiple dwelling units 1040, 1050 will generally have a similar general layout, although the number of floors and the number of dwelling units on each floor may vary from multiple dwelling unit to multiple dwelling unit.

The multiple dwelling unit building distributor 1210 receives the outside surface provider distribution cable 1025. One or more fibres 1130 from the outside service provider distribution cable 1025 are pulled from the outside service provider distribution cable 1025 and typically coupled with a splitter 1220. It will be appreciated that more than one splitter unit 1220 may be provided and that more than one fibre 1130 may be extracted from the outside service provider distribution cable 1025, according to the needs of the multiple dwelling unit 1030. The splitter 1220 takes a single fibre 1130 and couples this fibre, typically using splicing techniques, with a plurality N of pigtail cables 1225. The plurality of pigtail cables 1225 are provided to a patching arrangement 1230 which enables the plurality of pigtails 1225 to be selectively coupled with a riser cable 1230 comprising a plurality M of fibres which leaves the multiple dwelling unit building distributor 1210.

The riser cable 1230 is routed through a building region 1240 to a riser 1250. The building region 1240 may be, for example, a basement area of the multiple dwelling unit 1030. The riser cable 1230 may be surface mounted in the building region 1240.

The riser 1250 will typically be a service conduit within the multiple dwelling unit 1030 extending from the basement to the under-roof region of the building. The riser 1250 will therefore extend between the floors of the multiple dwelling unit 1030.

Within each dwelling unit 1200A-1200F, one or more fibres 1260A-1260F may be pulled from the riser cable 1230 in order to provide connectivity within the individual dwelling units 1200A-1200F. User equipment 1270A may then couple with the associated fibres 1260, as required.

It will be appreciated that arrangement enables user equipment within individual dwelling units to be coupled via the optical network with the service providers.

Also, the presence of the patch arrangement 1230 within the multiple dwelling unit building distributor 1210 enables connectivity with different service providers to be achieved.

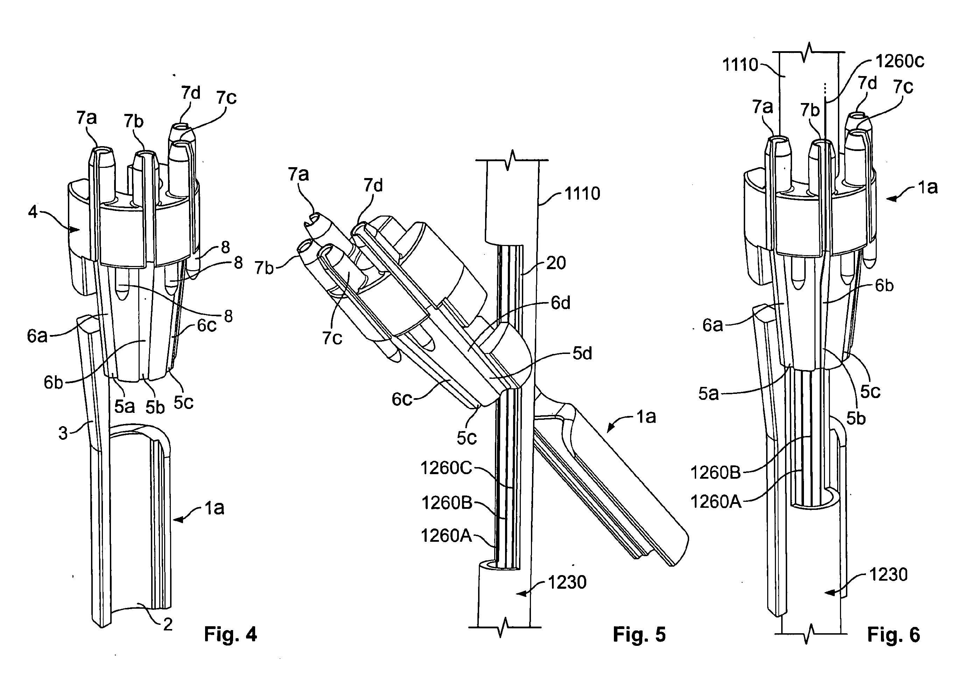

Figure 4 shows a base portion 1 a of a tap off device 1 in accordance with one embodiment of the present invention. The base portion 1 a includes a curved seating portion 2 in which a cable 1230 may be seated. That seating portion 2 is substantially channel-shaped. The seating portion is connected via a bridge 3 to a head region of the tap off device. The head region 4 includes four fibre inlet ports 5a, 5b, 5c, 5d and four fibre outlet ports 7a, 7b, 7c, 7d. The inlet ports are connected to the outlet ports by a channels 6a, 6b, 6c, 6d. The head portion of the base portion takes the form of a section of a frustocone. Namely, it tapers from the outlet portions 7a, 7b, 7c, 7d to the inlet ports 5a, 5b, 5c, 5d. The head portion 4 of the base 1 a also includes a number of pins 8 for engagement with sockets 9 provided in the lid 1 b.

When it is intended to tap off a cable to an individual dwelling unit, for example, fibre or fibre bundle 1260c to dwelling unit 1200c, a cut, known as a "window cut" is made in the casing 1110 of the cable to expose the fibres and fibre bundles enclosed therein. The window 20 created by the removal of a portion of the outer casing will be the location of the tap off.

Referring now to Figure 5 and Figure 6, it will be understood that the base portion 1 a can be fitted around a riser cable 1230. As was described above in relation to Figures 2 and 3, the riser cable 1230 comprises an outer jacket 1110 within which a number of fibre or fibre bundles 1260a, 1260b, 1260c are housed.

As can be seen in Figure 5, the base portion of the tap off device may be threaded onto the riser cable 1230 in the region of the window cut 20 by utilising the gap created by the bridge 3 between the seating portion and the head portion 4. Once threaded onto the cable an installer extracts the desired fibre or fibre bundle from the contents of the riser cable 1230. In this case the desired fibre or fibre bundle is 1260c. A length of that fibre 1260c is pulled from the casing and re-routed over the head portion 4 of the base 1 a. As can be seen from Figure 6, a user inserts fibre 1260 in channel 6b.

The fibre or fibre bundle 1260c leaves the optical fibre cable 1230 and enters the head portion of the tap off device via a fibre inlet port 5b. The channel 6b routes the fibre or fibre bundle to the fibre outlet port 7b. The fibre outlet port 7b is radially displaced from the fibre input port 5b and is arranged to guide the fibre from the tap off device in a direction which is substantially parallel to the longitudinal axis access of the optical cable.

A user may choose to make one tap off using this tap off device or may make up to four tap off operations using the device, each fibre or fibre bundle to be tapped off exiting the tap off device via a different outlet port. Once the fibre or fibres have been routed over the head portion 4 of the tap off device a lid portion 1 b is added to protect the tapped off fibre and protect fibres in the cable that have been exposed by the window cut 20.

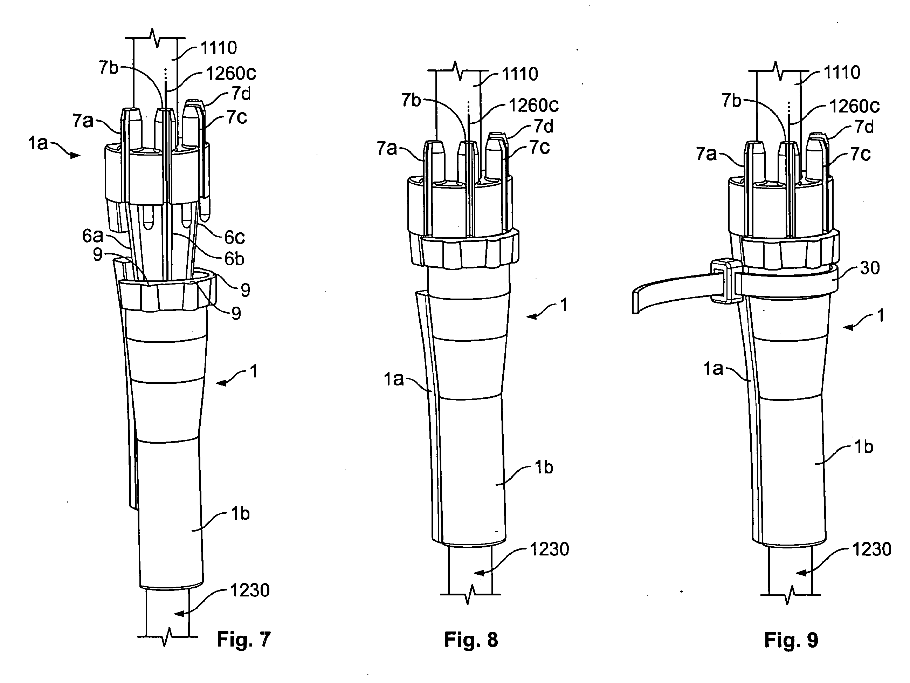

As can be seen from Figures 7 and 8, alignment of the lid portion 1 b on the base portion 1 a is facilitated by the engagement of pins 8 in sockets 9.

With reference to Figure 9, it can be seen that once the lid portion 1 b and base portion 1 a are located around the riser cable 1230, the tap off device 1 may be secured in position on the riser cable 1230 by an appropriately placed cable tie 30. The cable tie 30 served to clamp the two halves of the fibre tap off device in position on the cable 1230.

The fibre 1260c exiting the tap off device may be protected by a fibre sheath (not shown). Furthermore, it will be understood that each of the outlet ports 7a through 7d can be provided with a boot, that is to say, a substantially tubular piece of material which pushes over the outlet ports and around the fibres. That boot may have material properties, that restrict the manner in which the fibre leaving the tap off device may be bent or re-routed. For example, the boot may be made from a suitably stiff rubber material.

It will also be understood that various projections may be provided on the base and/or lid portion 1 a, 1 b that engage with the edges and for sides of window cut 20 to restrict the rotational and longitudal movement of the tap off device along the riser cable 1230.

From the outlet of the tap off device 7b, the tapped off fibre 1260c is re-routed to the dwelling unit 1200c.

Although illustrative embodiments of the invention have been disclosed in detail herein, with reference to the accompanying drawings, it is understood that the invention is not limited to the precise embodiments shown and that various changes and modifications can be effected therein by one skilled in the art without departing from the scope of the invention as defined by the appended claims and their equivalents.

## Claims

1. A tap off device securable around an optical fibre cable, said optical cable comprising a bundle of optical fibres, said tap off device comprising a base portion and a lid portion, a fibre inlet port provided on the base or lid portion, and a fibre outlet port provided on the base or lid portion, the fibre inlet port being arranged to receive a fibre from the cable and route said fibre to the fibre outlet port, the fibre outlet port being radially displaced from the fibre input port and arranged to guide the fibre from the tap off device in a direction which is substantially parallel to the longitudinal axis of the optical cable.

2. A tap off device according to claim 1, comprising a plurality of fibre outlet ports.

3. A tap off device according to claim 2, wherein the plurality of outlet ports are arranged substantially concentrically around the longitudinal axis of the optical cable.

4. A tap off device according to any preceding claim, wherein the outlet port is connectable to a bend control device arranged to prevent the fibre leaving the outlet port in a direction in which the minimum bend radius of fibre is exceeded.

5. A tap off device according to claim 4, in which the bend control device is integrally formed with the fibre outlet port.

6. A tap off device according to any preceding claim, wherein the base or lid portion are hingedly connected to each other.

7. A tap off device according to any preceding claim, wherein the base and lid portion are constructed from a flexible material.

8. A tap off device according to any preceding claim, wherein inner surfaces of the base and/or lid portion include gripping elements arranged to grip the outer surface of the optical cable.

9. A tap off device according to any preceding claim, further comprising rotation limitation elements that cooperate with a sleeve positioned around the optical fibre cable and substantially prevents rotational movement of the tap off device around the longitudinal axis of the cable.

10. A tap off device according to any preceding claim further comprising slide prevention elements that are operable to co-operate with a sleeve positioned around the optical fibre cable and substantially prevent movement of the tap off device in at least one direction along the axis of the cable.

11. A method of tapping off a fibre from an optical cable comprising a bundle of optical fibres comprising the steps of: providing a tap off device comprising a base portion and a lid portion, a fibre inlet port provided on the base or lid portion, and a fibre outlet port provided on the base or lid portion, the fibre outlet port being radially displaced from the fibre input port and arranged to guide the fibre from the tap off device in a direction which is substantially parallel to the longitudinal axis of the optical cable;
securing the tap off device around an optical fibre cable;
arranging the fibre input port to receive a fibre from the cable; and
routing said fibre from the input port to the fibre outlet port.
